(19) Europäisches Patentamt
European Patent Office
Office européen des brevets

(11) **EP 2 677 165 A2**

(12) **EUROPÄISCHE PATENTANMELDUNG**

(43) Veröffentlichungstag:
  **25.12.2013  Patentblatt 2013/52**

(51) Int Cl.:
  *F03B 13/18* (2006.01)     *F03B 15/00* (2006.01)

(21) Anmeldenummer: 13002854.1

(22) Anmeldetag: **03.06.2013**

(84) Benannte Vertragsstaaten:
  **AL AT BE BG CH CY CZ DE DK EE ES FI FR GB
  GR HR HU IE IS IT LI LT LU LV MC MK MT NL NO
  PL PT RO RS SE SI SK SM TR**
  Benannte Erstreckungsstaaten:
  **BA ME**

(30) Priorität: **18.06.2012  DE 102012012096**

(71) Anmelder: **ROBERT BOSCH GMBH
  70442 Stuttgart (DE)**

(72) Erfinder:
  • **Hagemann, Benjamin
    22851 Norderstedt (DE)**
  • **Houis, Nicolas
    74321 Bietigheim-Bissingen (DE)**
  • **Poddey, Alexander
    75446 Wiernsheim (DE)**

(74) Vertreter: **Wiesmann, Stephan
  Bosch Rexroth AG
  DC/IPR
  Zum Eisengießer 1
  97816 Lohr am Main (DE)**

(54) **Verfahren zum Betreiben eines Wellenenergiekonverters zur Umwandlung von Energie aus einer Wellenbewegung eines Fluids in eine andere Energieform**

(57)   Die Erfindung betrifft ein Verfahren zum Betreiben eines Wellenenergiekonverters (1) zur Umwandlung von Energie aus einer Wellenbewegung eines Fluids in eine andere Energieform, wobei der Wellenenergiekonverter (1) einen um eine Rotordrehachse drehbar gelagerten Hebelarm (4), der einen Kopplungskörper (3) trägt, und einen mit dem drehbar gelagerten Hebelarm (4) gekoppelten Energiewandler (2,7) aufweist, wobei eine Rotationsgeschwindigkeit ($\omega_1$) des Hebelarms (4) um die Rotordrehachse so gesteuert wird, dass sie im zeitlichen Mittel über eine Umdrehung einer Orbitalgeschwindigkeit ($\Omega$) der Wellenbewegung entspricht, wobei die Rotationsgeschwindigkeit des Hebelarms (4) so gesteuert wird, dass ein Winkel zwischen einer Tangentialgeschwindigkeit des Kopplungskörpers (3) und einer lokalen Strömungsgeschwindigkeit (v) der Wellenbewegung um den Kopplungskörper (3) höchstens um einen vorgebbaren Wert von 90° abweicht.

EP 2 677 165 A2

**Beschreibung**

Die vorliegende Erfindung betrifft ein Verfahren zum Betreiben eines Wellenenergiekonverters zur Umwandlung von Energie aus einer Wellenbewegung eines Fluids in eine andere Energieform, eine Recheneinheit zu dessen Durchführung sowie einen Wellenenergiekonverter.

Stand der Technik

Wellenkraftwerke (Wellenenergiekonverter) wandeln die Energie von Meereswellen in eine andere Energieform, z.B. zur Gewinnung elektrischen Stromes. Neuere Konstruktionsansätze verwenden dabei rotierende Einheiten (Rotoren), die die Wellenbewegung in ein Drehmoment wandeln. An diesen können hydrodynamische Auftriebskörper (d.h. Körper, die bei Umströmung einen Auftrieb erzeugen, wie zum Beispiel Auftriebsprofile und/oder Flettner-Rotoren mit Nutzung des Magnus-Effekts) als Kopplungskörper zum Einsatz kommen, mittels derer aus der anströmenden Welle Auftriebskräfte und durch die Anordnung der Kopplungskörper an dem Rotor ein Moment erzeugt wird, das in eine Rotationsbewegung des Rotors umsetzbar ist. Durch eine überlagerte Anströmung aus der Orbitalströmung der Wellenbewegung und der Eigendrehung des Rotors ergeben sich Auftriebskräfte an den Kopplungskörpern, wodurch ein Drehmoment in den Rotor eingeleitet wird. Aus der Veröffentlichung von Pinkster et al., "A rotating wing for the generation of energy from waves", 22. International Workshop on Water Waves and Floating Bodies (IWWWFB), Plitvice, 2007, ist in diesem Zusammenhang ein Anlagenkonzept bekannt, bei dem der Auftrieb eines umströmten Auftriebskörpers in eine Rotationsbewegung umgesetzt wird. In der GB 2 226 572 A ist ein Wellenenergiekonverter mit Flettner-Rotoren offenbart.

Es ist wünschenswert, den Betrieb von gattungsgemäßen Wellenenergiekonvertern zu verbessern.

Offenbarung der Erfindung

Erfindungsgemäß werden ein Verfahren zum Betreiben eines Wellenenergiekonverters zur Umwandlung von Energie aus einer Wellenbewegung eines Fluids in eine andere Energieform, eine Recheneinheit zu dessen Durchführung sowie ein Wellenenergiekonverter mit den Merkmalen der unabhängigen Patentansprüche vorgeschlagen. Vorteilhafte Ausgestaltungen sind Gegenstand der Unteransprüche sowie der nachfolgenden Beschreibung.

Vorteile der Erfindung

Die Erfindung schafft die Möglichkeit, einen Wellenenergiekonverter mit einer möglichst hohen Energieausbeute zu betreiben. Dies wird erreicht, indem die Positionierung und/oder Ausrichtung des an einem Hebelarm befestigten Kopplungskörpers relativ zur umgebenden Strömung so vorgegeben wird, dass ein möglichst hohes Antriebsmoment auf den um eine Rotordrehachse rotierenden Hebelarm wirkt.

Gemäß einem ersten Teilaspekt der Erfindung wird dazu der Wellenenergiekonverter so betrieben, dass die lokale Orbitalströmung am Kopplungskörper und die aus der Rotation des Hebelarms um die Rotordrehachse resultierende Anströmung im Wesentlichen senkrecht zueinander orientiert sind. Dies wird durch entsprechende Beeinflussung der Rotationsgeschwindigkeit des Hebelarms um die Rotordrehachse erzielt. Die Beeinflussung der Rotationsgeschwindigkeit des Hebelarms geschieht vorzugsweise durch Beeinflussung des Antriebsmoments und/oder des entnommenen Drehmoments (Lastmoments). Das Antriebsmoment kann insbesondere durch Einstellung des Pitchwinkels (Winkel zwischen Tangente an der Kreisbewegung des Kopplungskörpers um die Rotordrehachse und Profilsehne des Kopplungskörpers) eines hydrodynamischen Kopplungskörpers oder durch Einstellen der Eigenrotationsgeschwindigkeit eines Flettner-Rotors verändert werden. Das Lastmoment kann durch Einstellen des Energiewandlers, insbesondere eines elektrischen Generators, verändert werden. Die Erfindung bedient sich dabei vorzugsweise dem in der nachveröffentlichten DE 10 2011 105 177 der Anmelderin beschriebenen Steuerungskonzept eines Wellenenergiekonverters mit einem Rotor und wenigstens einem daran angebrachten Kopplungskörper. Die Offenbarung der DE 10 2011 105 177 wird zum Bestandteil der vorliegenden Erfindung gemacht.

In der DE 10 2011 105 177 wird eine Synchronitätsbedingung beschrieben, gemäß der die Rotationsgeschwindigkeit des Rotors bzw. des Hebelarms so gesteuert wird, dass sie im zeitlichen Mittel der Orbitalgeschwindigkeit(d.h. der Rotationsgeschwindigkeit des Wellenvektors an der Rotorachse) der Wellenbewegung entspricht. Auch gewisse Abweichungen seien zugelassen, werden jedoch nicht quantifiziert. Dieses Betriebsverfahren wird durch die vorliegende Erfindung weitergebildet. Im Rahmen der Erfindung wird die beschriebene Synchronitätsbedingung so weitergebildet, dass die Winkelgeschwindigkeit des Hebelarms im zeitlichen Mittel über eine Umdrehung der Winkelgeschwindigkeit der Wellenbewegung entspricht, dazwischen jedoch Abweichungen existieren, d.h. es wird wenigstens eine Phase der Umdrehung vorgegeben, in der der Hebelarm schneller rotiert als die Orbitalbewegung, und wenigstens eine andere Phase, in der der Hebelarm langsamer rotiert als die Orbitalbewegung. Die Rotationsgeschwindigkeit des Hebelarms wird dabei so gesteuert, dass - wie oben gefordert -die lokale Orbitalströmung am Kopplungskörper und die aus der Rotation des Hebelarms um die Rotordrehachse resultierende Anströmung im Wesentlichen senkrecht zueinander orientiert sind, also der Winkel zwischen einer Tangentialgeschwindigkeit des Kopplungskörpers und einer lokalen Strömungsgeschwindigkeit der Wellenbewegung um den Kopplungskörper höchstens um einen vorgebbaren Wert von 90° abweicht. Zweckmäßigerweise ist der zulässige Bereich um 90° nicht zu groß, insbesondere umfasst er Werte $\pm$ 25°, $\pm$10° oder weniger.

Vorzugsweise erfolgt die Ansteuerung so, dass die Rotationsgeschwindigkeit des Hebelarms um die Rotordrehachse, insbesondere immer, langsamer als die Orbitalgeschwindigkeit der Wellenbewegung ist, wenn die genannte Rotationsgeschwindigkeit eine Geschwindigkeitskomponente enthält, die mit der Wellenfortschrittsgeschwindigkeit gleichgerichtet ist, und dass sie, insbesondere immer, schneller als die Orbitalgeschwindigkeit der Wellenbewegung ist, wenn sie eine Geschwindigkeitskomponente enthält, die der Wellenfortschrittsgeschwindigkeit entgegen gerichtet ist.

Es wird weiterhin ein Wellenenergiekonverter vorgeschlagen, der wenigstens zwei jeweils einen Kopplungskörper tragende Hebelarme aufweist, wobei der von den Hebelarmen an der Rotordrehachse gebildete Winkel veränderbar ist. Dies erlaubt besonders vorteilhaft, die Winkelpositionen und Rotationsgeschwindigkeiten der Hebelarme unabhängig voneinander einzustellen, so dass für jeden der Hebelarme die lokale Orbitalströmung am gehaltenen Kopplungskörper und die Anströmung aufgrund der Rotation des Hebelarms um die Rotordrehachse wie beschrieben im Wesentlichen senkrecht zueinander orientiert sind.

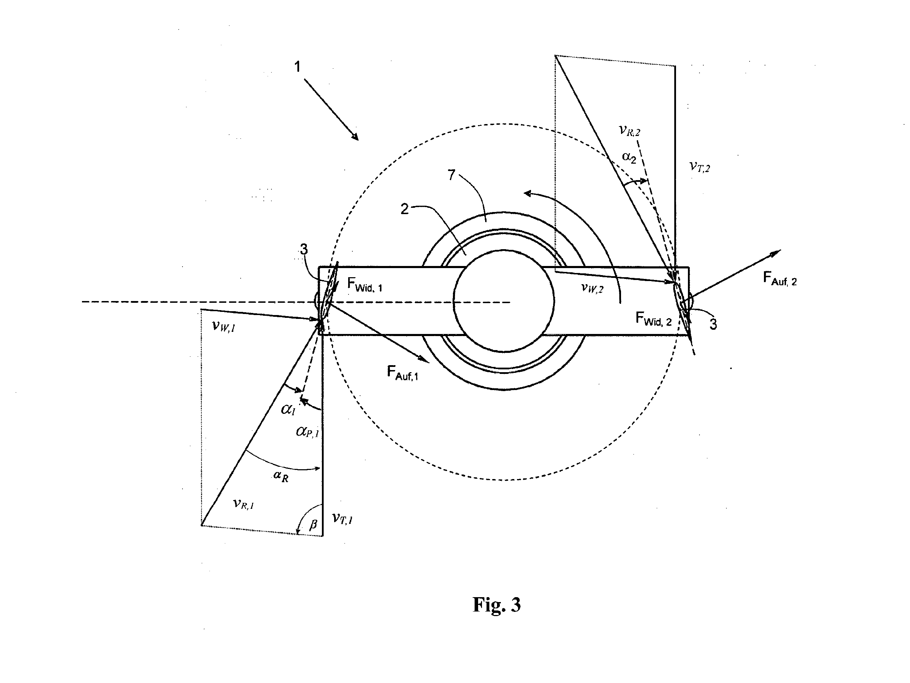

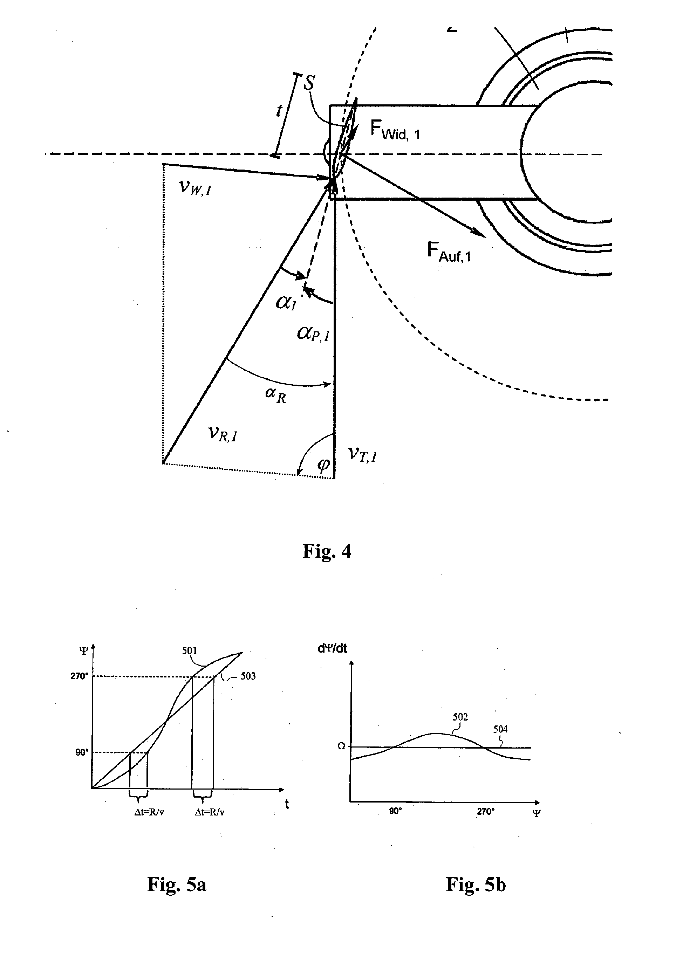

Gemäß einem weiteren Teilaspekt der Erfindung wird der jeweilige Pitchwinkel eines hydrodynamischen Kopplungskörpers so eingestellt, dass sich ein möglichst hohes Antriebsmoment ergibt. Dies erfolgt durch Bestimmen einer Abhängigkeit jeweils des Auftriebsbeiwerts und des Widerstandsbeiwerts des Kopplungskörpers von einem Anströmwinkel (d.h. der Winkel zwischen resultierender Anströmung und Profilsehne des Kopplungskörpers) und durch Maximieren der sich aus der Auftriebskraft und der Widerstandskraft ergebenden Effektivkraft durch Variation des Anströmwinkels unter der Bedingung, dass kein vollständiger Strömungsabriss erfolgt. Aus dem so ermittelten Anströmwinkel ergibt sich ohne Weiteres der notwendige Pitchwinkel. Ein bevorzugter Weg zur Bestimmung wird weiter unten unter Bezugnahme auf die Figuren 3 und 4 beschrieben.

Eine erfindungsgemäße Recheneinheit, z.B. ein Steuergerät eines Wellenenergiekonverters, ist, insbesondere programmtechnisch, dazu eingerichtet, ein erfindungsgemäßes Verfahren durchzuführen.

Auch die Implementierung der Erfindung in Form von Software ist vorteilhaft, da dies besonders geringe Kosten ermöglicht, insbesondere wenn eine ausführende Recheneinheit noch für weitere Aufgaben genutzt wird und daher ohnehin vorhanden ist. Geeignete Datenträger zur Bereitstellung des Computerprogramms sind insbesondere Disketten, Festplatten, Flash-Speicher, EEPROMs, CD-ROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

Figurenbeschreibung

Figur 1     zeigt eine bevorzugte Ausführungsform eines erfindungsgemäßen Wellenenergiekonverters in perspektivischer Ansicht.

Figur 2     zeigt den Wellenenergiekonverter gemäß Figur 1 in einer Seitenansicht und veranschaulicht den Pitchwinkel $\alpha_P$ und den Phasenwinkel $\Delta$ zwischen Rotor und Orbitalströmung.

Figur 3     zeigt resultierende Anströmwinkel $\alpha_1$ und $\alpha_2$ und resultierende Kräfte an den Kopplungskörpern des Rotors aus Figur 2.

Figur 4     zeigt den Bereich um einen der Kopplungskörper aus Figur 3 vergrößert.

Figur 5a     zeigt den Rotationswinkel eines Hebelarms über der Zeit für einen gemäß einer bevorzugten Ausführungsform der Erfindung betriebenen Wellenenergiekonverters.

Figur 5b     zeigt die zugehörige Rotationsgeschwindigkeit des Hebelarms über der Winkelposition.

Figur 6a     zeigt in einer schematischen Seitenansicht eine weitere bevorzugte Ausführungsform eines erfindungsgemäßen Wellenenergiekonverters mit relativ zueinander verschwenkbaren Hebelarmen im geraden Zustand für eine vertikale Orbitalströmung.

Figur 6b     zeigt den Wellenenergiekonverter gemäß Figur 6a mit verschwenkten Hebelarmen.

Detaillierte Beschreibung der Zeichnung

In den Figuren sind gleiche oder gleich wirkende Elemente mit identischen Bezugszeichen angegeben. Auf eine wiederholte Erläuterung wird der Übersichtlichkeit halber verzichtet.

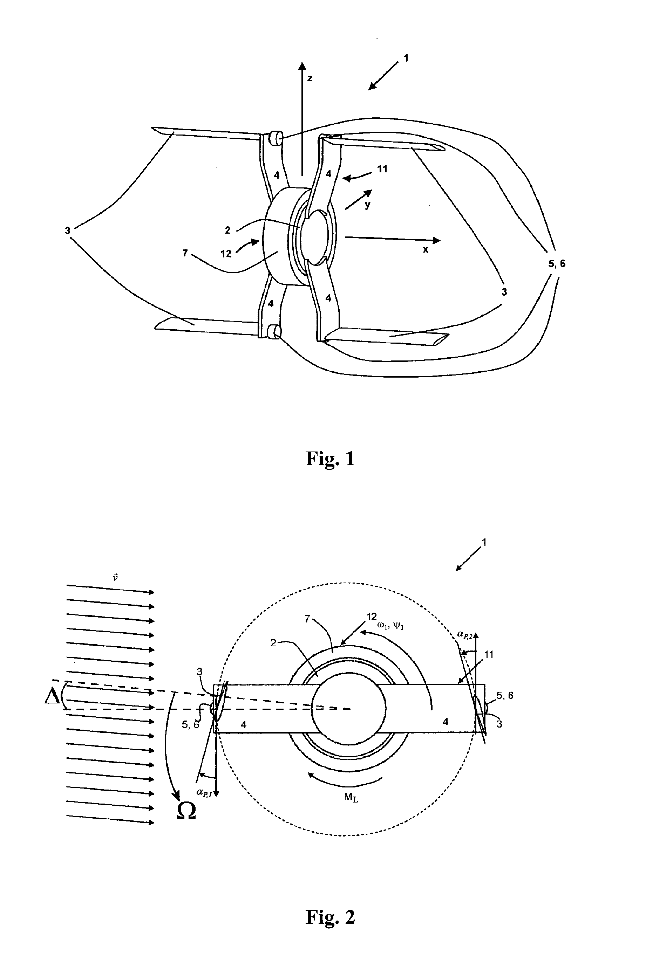

Die vorgestellte Erfindung bezieht sich auf den Betrieb von rotierenden Anlagen zur Gewinnung von Energie aus bewegten Fluiden, beispielsweise aus dem Meer. Das Funktionsprinzip solcher Anlagen wird im Folgenden zunächst unter Bezugnahme auf die Figuren 1 bis 3 erläutert.

Figur 1 zeigt einen Wellenenergiekonverter 1 mit einer Rotorbasis 2, einem Gehäuse 7 und vier jeweils über Hebelarme 4 an der Rotorbasis 2 befestigte Kopplungskörper 3. Der Wellenenergiekonverter 1 ist zum Betrieb unterhalb der Wasseroberfläche eines welligen Gewässers - beispielsweise eines Ozeans - vorgesehen. Die Kopplungskörper 3 sind im gezeigten Beispiel profiliert ausgeführt, können jedoch ebenso als Flettner-Rotoren, d.h. Zylinder mit zusätzlich Eigenrotation, ausgeführt sein. Zweckmäßigerweise steht für jeden der Kopplungskörper 3 eine Verstelleinrichtung 5 mit mindestens einem Freiheitsgrad zur Verfügung, um die Ausrichtung (z.B. "Pitchwinkel", d.h. der Winkel zwischen Profilsehne und Tangentialgeschwindigkeit) des jeweiligen Kopplungskörpers zu verändern und damit die Wechselwirkung zwischen Fluid und Kopplungskörper zu beeinflussen. Der Freiheitsgrad der Verstelleinrichtungen wird hier durch Verstellparameter (Pitchwinkel) beschrieben. Alternativ kann im Fall von Flettnerrotoren als Kopplungskörper auch die Rotationsgeschwindigkeit der Flettnerrotoren angepasst werden. Bei den Verstelleinrichtungen handelt es sich vorzugsweise um elektromotorische Verstelleinrichtungen. Vorzugsweise steht auch eine Sensorik 6 zum Erfassen der aktuellen Verstellung bereit. Die Komponenten 2, 3, 4, 5, 6 sind Bestandteile eines Rotors 11, welcher um eine Rotordrehachse x rotiert.

Das Gehäuse 7 ist Bestandteil eines Rahmens 12. Der Rotor 11 ist relativ zum Rahmen 12 drehbar gelagert. Der Rahmen 12 ist im gezeigten Beispiel drehfest mit einem Ständer eines direktgetriebenen Generators zur Stromerzeugung verbunden, der Rotor 11 (hier die Rotorbasis 2) ist drehfest mit einem Läufer dieses direktgetriebenen Generators verbunden. Es kann ebenso ein Getriebe zwischen Rotorbasis und Generatorläufer vorgesehen sein. Eine Recheneinheit, die dazu eingerichtet ist, ein erfindungsgemäßes Verfahren durchzuführen, ist innerhalb des Gehäuses 7 angeordnet und dient zur Steuerung des Betriebs des Wellenenergiekonverters 1. Nicht dargestellt ist eine vorgesehene Befestigung des Wellenenergiekonverters 1 am Meeresgrund, die beispielsweise durch ein Mooringsystem erfolgen kann.

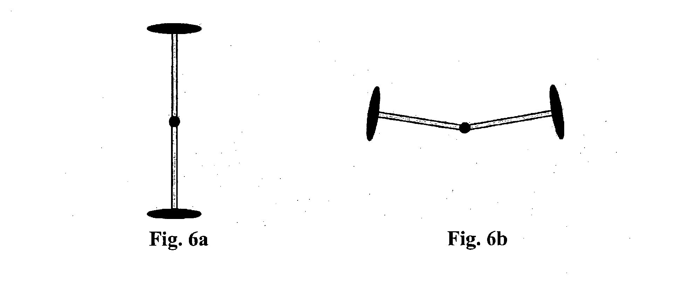

Die Hebelarme 4 sind an jeder Rotorseite in einer Grundstellung in einem Winkel von 180° zueinander angeordnet. Gemäß einer bevorzugten Ausführungsform, wie in Figur 6 veranschaulicht, sind die Hebelarme 4, die sich auf einer Rotorseite gegenüber liegen, zueinander in der Rotationsebene verschwenkbar, d.h. der Winkel zwischen den Hebelarme kann in einem gewissen Bereich um die 180° verändert werden. Dazu können ein Antriebe, Bremsen und/oder eine Sensorik vorgesehen sein.

Figur 2 zeigt eine Seitenansicht der Anlage mit um 90° zu der in Figur 1 gezeigten Stellung verdrehten Hebelarmen. Die Verstellparameter sind als Pitchwinkel $\alpha_{P,i}$ zwischen der Profilsehne S (siehe Figur 4) der Kopplungskörper 3 und der Tangente (mit einem Pfeil dargestellt; siehe auch $v_{T,1}$ in Figur 4) an der Kreisbahn durch den Aufhängepunkt (Drehpunkt) der Kopplungskörper erkennbar. Vorzugsweise sind die Kopplungskörper 3 an ihrem Druckpunkt aufgehängt, um im Betrieb auftretende Rotationsmomente auf die Kopplungskörper und damit die Anforderungen an die Halterung und/oder die Verstelleinrichtungen zu reduzieren.

Die Darstellung der Kopplungskörper in Figur 2 und in den weiteren Figuren erfolgt nur beispielhaft zur Definition der unterschiedlichen Maschinenparameter. Vorzugsweise werden im Betrieb die Pitchwinkel der beiden Kopplungskörper entgegengesetzt zur Darstellung ausgeführt. Der in Figur 2 linke Kopplungskörper wäre dann nach innen verstellt und der in Figur 2 rechte Kopplungskörper nach außen. Zusätzlich kann auch eine Krümmung der Kopplungskörper an die Kreisbahn vorteilhaft sein.

Der Wellenenergiekonverter 1 ist von einem Strömungsvektorfeld $\vec{v}$ umgeben. Bei den beschriebenen Ausführungsformen wird davon ausgegangen, dass es sich bei der Anströmung um die Orbitalströmung von Meereswellen, deren Richtung sich kontinuierlich ändert, handelt. Im dargestellten Fall ist die Drehung der Orbitalströmung entgegen dem Uhrzeigersinn orientiert, die dazugehörige Welle breitet sich also von rechts nach links aus. Im monochromatischen Fall ändert sich die Anströmungsrichtung an der Rotordrehachse (x in Figur 1) dabei mit der Winkelgeschwindigkeit $\Omega = 2\pi f = $ const., wobei f die Frequenz der monochromatischen Welle darstellt. In multichromatischen Wellen unterliegt $\Omega$ dagegen einer zeitlichen Änderung, $\Omega = f(t)$, da die Frequenz f eine Funktion der Zeit ist, $f = f(t)$. Durch die Anströmung entstehen Kräfte an den Kopplungskörpern. Dadurch verändert sich der Winkel $\psi_1$ der Rotorbasis 2 gegenüber der Horizontalen mit der Drehgeschwindigkeit $\omega_1 = \dot{\psi}_1$ ($\dot{\psi}_1$ bezeichnet die Ableitung der zeitabhängigen Größe $\psi_1$ nach der Zeit). Es ist vorgesehen, dass der Hebelarm 4 im zeitlichen Mittel synchron zur Orbitalströmung der Wellenbewegung mit $\omega_1$ rotiert. Hierbei gilt beispielsweise $\Omega \approx \omega_1$. Ein Wert oder ein Wertebereich für eine Winkelgeschwindigkeit $\omega_1$, des Rotors wird also auf Grundlage einer Winkelgeschwindigkeit $\Omega$ der Orbitalströmung vorgegeben oder an diese angepasst. Hierbei kann eine konstante Steuerung oder eine kurzzeitige bzw. kurzfristige Anpassung erfolgen.

Am Rotor 11 wirkt ein veränderbares Lastmoment $M_L$ zwischen der Rotorbasis 2 und dem Gehäuse 7 bzw. Rahmen 12. Das Lastmoment kann in positiver Richtung (entgegen der Rotationsgeschwindigkeit $\omega_1$) aber auch in negativer Richtung (also antreibend) wirken. Das Lastmoment wird beispielsweise durch eine Stromerzeugung im Generator verursacht.

Ein Winkel zwischen der Rotororientierung, die durch eine untere gestrichelte Linie veranschaulicht ist, die durch die Rotordrehachse und die Mitte der beiden Verstelleinrichtungen 5 verläuft, und der Richtung der Orbitalströmung, die durch eine obere gestrichelte Linie veranschaulicht ist, die durch einen der Geschwindigkeitspfeile $\vec{v}$ verläuft, wird als Phasenwinkel $\Delta$ bezeichnet, dessen Betrag durch die Einstellung des Antriebsmoments und/oder des Lastmoments beeinflusst werden kann. Dabei erscheint ein Phasenwinkel an der Rotordrehachse von -25° bis 25°, vorzugsweise von -10° bis 10° und besonders bevorzugt von etwa 0° zur Erzeugung des Antriebsmoments als besonders vorteilhaft, da hierbei die Orbitalströmung $v_W$ (W für Welle) und die Anströmung aufgrund der Eigenrotation $v_T$ (T für Tangente) (siehe Figur 3) weitgehend senkrecht zueinander orientiert sind, was zu einer Maximierung des Betrags der resultierenden Anströmung $v_R$ (R für Resultat) führt.

In den Figuren 3 und 4 sind die sich ergebenden Anströmungsverhältnisse und die sich einstellenden Kräfte an den Kopplungskörpern, die zu einem Antriebsmoment führen, dargestellt. Es ist zu beachten, dass es selbst bei monochromatischen (eine Wellenlänge und Amplitude) Wellen bereits bei Rotoren mit großen Durchmessern dazu kommt, dass sich die Kopplungskörper 3 während einer Umdrehung relativ zur Welle an unterschiedlichen Positionen befinden, was zu einer lokal unterschiedlichen Anströmungsrichtung führt. Hierauf kann durch Veränderung der Rotationsgeschwindigkeit des oder der Hebelarme um die Rotordrehachse und/oder mit Hilfe einer individuellen Einstellung des jeweiligen Pitchwinkels $\alpha_P$ reagiert werden, wie weiter unten erläutert wird.

An beiden Kopplungskörpern (Index $i$) sind in Figur 3 und 4 die lokalen Anströmungen durch die Orbitalströmung ($v_{W,i}$) und durch die Eigenrotation ($v_{T,i}$), die als Vektorsumme aus diesen beiden Anströmungen resultierende Anströmung ($v_{R,i}$) sowie die sich ergebenden Anströmwinkel $\alpha_i$ zwischen resultierender Anströmung $v_R$ und Profilsehne S dargestellt. Dargestellt sind darüber hinaus die sich ergebenden Auftriebs- und Widerstandskräfte $F_{Auf,i}$ bzw. $F_{Wid,i}$ an beiden Kopplungskörpern, die sowohl vom Betrag der Anströmgeschwindigkeit $v_{R,i}$; als auch von den Anströmwinkeln $\alpha_i$ und damit auch von den Pitchwinkeln $\alpha_{P,1}$ und $\alpha_{P,2}$ abhängig sind und - wie bekannt - senkrecht ($F_{Auf,i}$) bzw. parallel ($F_{Wid,i}$) zur Richtung von $v_{R,i}$ orientiert sind.

Im Falle von stationären multichromatischen Wellen (Wellen mit mehreren, unterschiedlichen Frequenz- und Amplitudenanteilen, diese Anteile sind jedoch konstant) oder multichromatischen Wellen (die Frequenz- und Amplitudenanteile sind zeitveränderlich) kann als lokale Orbitalströmung ($v_{W,i}$) ein sich effektiv ergebender Wert, z.B. ein Mittelwert oder ein Wert des Hauptanteils, verwendet werden. Die lokale Orbitalströmung kann gemessen oder berechnet werden. Beispielsweise kann die Wellenhöhe an einem Ort, an welchem die Welle zeitlich vor dem Wellenenergiekonverter vorbeikommt, gemessen werden. Auch die Winkelposition des Kopplungskörpers kann gemessen werden. Es kann eine Spektralanalyse zur Bestimmung der Frequenz- und Amplitudenanteile durchgeführt werden. Diese Daten können dann zur Abstimmung eines Modells (z.B. monochromatisch basierend auf Hauptfrequenzanteil, multichromatisch mit einer begrenzten Anzahl von stationären oder zeitlich veränderlichen Anteilen, nichtlineare Wellenmodelle) zur Beschreibung der Wellenausbreitung und daraus resultierenden Strömungsbedingungen verwendet werden. Die nach dem Modell zu erwartenden Anströmungsrichtung und ggf. -geschwindigkeit am Ort des Kopplungskörpers können berechnet werden, um einen geeignete Anströmwinkel zu erzielen. Z.B. können die lokalen Strömungsbedingungen auch aus einem Modell der Wellenausbreitung berechnet/abgeschätzt werden, wie es z.B. in der nachveröffentlichten EP 11009798.7 beschrieben wird.

Für den dargestellten Fall ergibt sich durch die beiden Auftriebskräfte $F_{Auf,i}$ ein Rotordrehmoment entgegengesetzt dem Uhrzeigersinn und durch die beiden Widerstandskräfte $F_{Wid,i}$ ein betragsmäßig kleineres Rotordrehmoment in entgegengesetzter Richtung (also im Uhrzeigersinn). Die Summe aus beiden Rotordrehmomenten führt zu einer Rotation des Rotors 11, deren Geschwindigkeit durch Beeinflussung des Antriebsmoments und/oder des Lastmoments eingestellt werden kann.

Der Betrag der Geschwindigkeit der resultierenden Anströmung ergibt sich zu:

$$v_R = \sqrt{\left(v_T - v_W \cos\beta\right)^2 + \left(v_W \sin\beta\right)^2}$$ , wobei $\beta$

der Winkel zwischen $v_T$ und $v_W$ ist.

Der Anströmwinkel ergibt sich zu:

$$\alpha = \underbrace{\arcsin\left(\frac{\sin\beta}{v_T} v_W\right)}_{\alpha_R} - \alpha_P$$

Der erste Term beschreibt dabei einen Winkel $\alpha_R$ zwischen $v_R$ und $v_T$.

Die beschriebenen Kräfte ergeben sich dann zu:

$$F_{Auf} = \frac{\rho}{2} \cdot b \cdot t \cdot v_T^2 \cdot c_a(\alpha)$$

$$F_{Wid} = \frac{\rho}{2} \cdot b \cdot t \cdot v_T^2 \cdot c_w(\alpha)$$

mit Fluiddichte p, Flügelspannweite b (Länge des Kopplungskörpers in Figur 3 senkrecht zur Zeichenebene),

Profilsehnenlänge t, Auftriebsbeiwert $c_a$ und Widerstandsbeiwert $c_w$.

Zur Ermittlung der Beiwerte werden zweckmäßigerweise winkelabhängige Messungen bzw. Strömungssimulationen durchgeführt. Da Profilform und Reynoldszahl während des Betriebs fest und damit keine Stellgrößen sind, wird als einzige Stellgröße der Anströmwinkel $\alpha$ betrachtet.

Eine in Tangentialrichtung am Hebelarm wirkende Effektivkraft $F_{eff}$ ergibt sich zu:

$$F_{eff} = F_{Auf} \sin(\alpha - \alpha_P) - F_{Wid} \cos(\alpha - \alpha_P)$$

Das Antriebsmoment ergibt sich durch $F_{eff}$ x Hebelarmlänge.

Ist die sich ergebende Effektivkraft positiv, führt dies zu einer Rotation gegen den Uhrzeigersinn.

$\alpha$ hängt von ermittelbaren Parametern ab, so dass in der Folge $\alpha_P$ so eingestellt werden kann, dass die Effektivkraft zu einem möglichst großen Antriebsmoment führt. Hierbei ist ein vollständiger Strömungsabriss zu vermeiden, der bei zu großen Anströmwinkeln auftritt. Es wird hierzu zweckmäßigerweise ein sog. kritischer Ablösewinkel berücksichtigt, der von der Profilform und der Reynoldszahl abhängt.

Insgesamt ergibt sich der zu einem möglichst hohen Antriebsmoment führende Pitchwinkel gemäß:

$$\tan \alpha_R \left( \frac{\partial c_a}{\partial \alpha} \right)_{\alpha = \alpha_{max}} = \left( \frac{\partial c_w}{\partial \alpha} \right)_{\alpha = \alpha_{max}}$$

$$\alpha_p = a_R - a_{max}$$

Die Geschwindigkeit und Richtung von $v_W$ kann besonders bevorzugt am Ort des Kopplungskörpers mittels geeigneter Sensoren gemessen werden, um hieraus $\alpha_R$ zu bestimmen. Sie kann auch von einem Wert an einem anderen Messort, bspw. der Rotordrehachse, aus entwickelt werden, wie nachfolgend erläutert.

Für die folgenden Betrachtungen wird davon ausgegangen, dass die Richtung von $v_W$ zentral an der Rotordrehachse des Wellenenergiekonverters bekannt ist, z.B. durch Messung. Das Antriebsmoment ist jedoch abhängig von Richtung und Betrag des Wellenvektors $v_{W,lokal}$ direkt am Ort des Kopplungskörpers. Dies kann, wie nachfolgend erläutert, bestimmt werden. Alternativ kann die lokale Wellenanströmung am Kopplungskörper durch geeignete Sensorik (z.B. Ultraschallsensoren, Drucksensoren auf den Kopplungskörpern) ermittelt werden.

Für eine monochromatische Welle (eine Wellenhöhe bzw. Amplitude H und eine Wellenlänge $L$ (-> Wellenperiode $T$)) kann bei Erfüllung der Tiefwasserbedingung (Abstand Oberfläche zum Meeresboden > halbe Wellenlänge L) ihr Betrag tiefenabhängig berechnet werden gemäß:

$$v_W(z) = \frac{\pi \cdot H}{T} e^{\frac{2\pi}{L}z}$$

Die Wassertiefe z wird dabei von der ruhenden Wasseroberfläche negativ in Richtung Meeresboden gemessen.

Für den aktuellen Abstand z des Kopplungskörpers von der Ruhewasserlinie gilt:

$$z = z_0 - R \sin \Psi_1$$

Dabei bezeichnet $z_0$ den Abstand der Rotordrehachse zur Ruhewasserlinie, R den Radius der Bewegungskreisbahn des Kopplungskörpers und $\Psi_1$ den Drehwinkel des Hebelarms bezüglich der horizontalen x-Achse.

Bei synchronem Betrieb und großem Durchmesser bzw. Radius R kann die Wellenanströmrichtung nur an der Rotordrehachse über die Zeit synchron mit der Rotordrehung bleiben. Durch die räumliche Ausdehnung des Rotors stimmt die Richtung von $v_{W,lokal}$ am Kopplungskörper nur bei einer 6- bzw. 12 Uhr Stellung des Hebelarms mit der Richtung von $v_W$ an der Rotordrehachse überein. Die Richtung von $v_{W,lokal}$ am Kopplungskörper weist in allen anderen Positionen eine Phasenverschiebung $\delta$ zu $v_W$ an der Rotordrehachse auf. Die Phasenverschiebung ist abhängig vom Drehwinkel $\beta$ und der Wellenlänge $L$ gemäß:

$$\delta = 2\pi \cdot \frac{R}{L} \cos \beta$$

$v_{W,lokal}$ eilt $v_W$ an der Drehachse bei einer Abwärtsbewegung (entspricht der der Wellenausbreitungsrichtung abgewandten Seite des Rotors) nach. Bei einer Aufwärtsbewegung ergeben sich die umkehrten Verhältnisse.

Für die folgende Betrachtung wird nun im Unterschied zu vorher vorausgesetzt, dass die Wellenfortschrittsgeschwindigkeit von links nach rechts verläuft und der Rotor bzw. der Hebelarm im Uhrzeigersinn mit $\omega = \Omega$ (ständig wellensynchron) um die Rotordrehachse rotiert. Bei einem Rotor mit einem Hebelarm mit großer Hebelarmlänge ergibt sich hierbei folgende Situation:

In der 12 Uhr-Position befindet sich der Kopplungskörper in seinem oberen Umkehrpunkt und wird, wie auch das Zentrum (Rotordrehachse), weitgehend von oben angeströmt.

In der 3 Uhr-Position wird das Zentrum (Rotordrehachse) von rechts angeströmt. Aufgrund des großen Rotordurchmessers im Vergleich zur Wellenlänge befindet sich der Kopplungskörper allerdings in einem Bereich, in dem die Strömung $v_{W,lokal}$ schräg nach oben gerichtet ist. Die lokale Welle eilt hier gegenüber der Welle im Rotorzentrum nach, so dass der Kopplungskörper bei ständig wellensynchroner Rotation des Hebelarms hier nicht optimal, sondern schräg von rechts oben angeströmt wird. In der 6 Uhr-Position wird der Kopplungskörper von unten angeströmt. Hier wird unabhängig vom Durchmesser - wie auch bei 12 Uhr - eine lagerichtige Anströmung erreicht.

In der 9 Uhr-Position wird das Zentrum (Rotordrehachse) von links angeströmt. Aufgrund des großen Durchmessers im Vergleich zur Wellenlänge befindet sich der Kopplungskörper allerdings in einem Bereich, in dem die Strömung $v_{W,lokal}$ schräg nach unten gerichtet ist. Die lokale Welle eilt hier gegenüber der Welle im Rotorzentrum voraus, so dass der Kopplungskörper bei ständig wellensynchroner Rotation des Hebelarms hier nicht optimal, sondern schräg von links oben angeströmt wird.

Eine bevorzugte Reaktionsmöglichkeit auf die beschriebene Tatsache, dass bei ständiger Wellensynchronität die Richtung von $v_{W,lokal}$ am Kopplungskörper nur bei einer 6- bzw. 12 Uhr Stellung des Hebelarms mit der Richtung von $v_W$ an der Rotordrehachse übereinstimmt, besteht in einer entsprechenden Abweichung von der ständigen Wellensynchronität durch Variation der Rotationsgeschwindigkeit des Hebelarms um die Rotordrehachse.

Hier wird vorzugsweise die Erkenntnis verwendet, dass der Betrag der resultierenden Anströmung $v_R$ und damit auch das Antriebsmoment unabhängig vom Pitchwinkel maximiert werden können, wenn der Winkel $\varphi$ zwischen $v_T$ und $v_W$ 90° ist. Gemäß einer weiteren bevorzugten Ausführungsform der Erfindung wird daher die Rotationsgeschwindigkeit eines Hebelarms um die Rotordrehachse so eingestellt, dass der Winkel $\varphi$ zwischen $v_T$ und $v_W$ im Wesentlichen immer ca. 90° ist, sich also höchstens in einem gewissen Bereich um 90° bewegt. Die Rotationsgeschwindigkeit eines Hebelarms wird so gesteuert, dass sie im zeitlichen Mittel über eine Umdrehung der Orbitalgeschwindigkeit der Wellenbewegung entspricht, wobei sie jedoch langsamer als die Orbitalgeschwindigkeit der Wellenbewegung ist, wenn die Bewegung des Kopplungskörpers eine Geschwindigkeitskomponente enthält, die mit der Wellenfortschrittsgeschwindigkeit gleichgerichtet ist (also zwischen 9 Uhr und 3 Uhr), und wobei sie schneller als die Orbitalgeschwindigkeit der Wellenbewegung ist, wenn die Bewegung des Kopplungskörpers eine Geschwindigkeitskomponente enthält, die der Wellenfortschrittsgeschwindigkeit entgegen gerichtet ist (also zwischen 3 Uhr und 9 Uhr). Die Rotationsgeschwindigkeit des Hebelarms wird weiterhin so gesteuert, dass sie der Orbitalgeschwindigkeit der Wellenbewegung entspricht, wenn die Geschwindigkeit des Kopplungskörpers senkrecht auf der Wellenfortschrittsgeschwindigkeit steht (also bei 3 Uhr und 9 Uhr). Es wird also ein gezielte Abweichung von der ständigen Wellensynchronität herbeigeführt, wie nachfolgend beschrieben und in den Figuren 5a und 5b dargestellt. Die Winkelposition eines Kopplungskörpers eines erfindungsgemäß betriebenen Wellenenergiekonverters über der Zeit t ist darin mit 501, die Winkelgeschwindigkeit bzw. Rotationsgeschwindigkeit über der Winkelposition $\Psi$ mit 502 bezeichnet. Die Winkelposition eines Kopplungskörpers eines ständig wellensynchron betriebenen Wellenenergiekonverters über der Zeit t ist darin mit 503, die Winkelgeschwindigkeit bzw. Rotationsgeschwindigkeit über der Winkelposition $\varphi$ mit 504 bezeichnet. Es ist unmittelbar ersichtlich, dass die Rotationsgeschwindigkeit 504 ständig $\Omega$ ist.

In der 12 Uhr-Position (0° in Figur 5) wird der Hebelarm von oben angeströmt. In diesem Bereich weist der Hebelarm eine geringere Rotationsgeschwindigkeit 502 auf als ein Synchronläufer, beschleunigt im Weiteren jedoch positions- und anströmungsabhängig. Das führt dazu, dass er im weiteren Verlauf dem Synchronläufer hinterherhinkt.

Erreicht der Hebelarm die 3 Uhr-Position (90°), so ist der größte Phasenversatz $\Delta t$ gegenüber einem Synchronläufer erreicht. Die Zeitdifferenz entspricht hier dem Verhältnis aus Hebelarmlänge r und Ausbreitungsgeschwindigkeit v der Welle, so dass die 3 Uhr-Position erst dann erreicht wird, wenn die lokale Anströmung dort horizontal von rechts nach links ist. Wie erwähnt, entspricht hier die Rotationsgeschwindigkeit 502 des Hebelarms der Orbitalgeschwindigkeit $\Omega$ weitgehend der Wellenbewegung und damit der Rotationsgeschwindigkeit 504 eines Synchronläufers.

Die 6 Uhr-Position (180°) erreicht der Hebelarm weitgehend gleichzeitig mit dem Synchronläufer. Der Hebelarm wird weitgehend von unten angeströmt. Die Rotationsgeschwindigkeit 502 ist hier größer als die Rotationsgeschwindigkeit 504 eines Synchronläufers.

Erreicht der Hebelarm die 9 Uhr-Position (270°), so ist wieder der größte Phasenversatz $\Delta t$ gegenüber einem Synchronläufer erreicht. Die Zeitdifferenz entspricht weitgehend dem Verhältnis aus Hebelarmlänge r und Ausbreitungsgeschwindigkeit v der Welle, so dass die 9 Uhr-Position bereits dann erreicht wird, wenn die lokale Anströmung dort horizontal von links nach rechts ist. Wie erwähnt, entspricht hier die Rotationsgeschwindigkeit 502 des Hebelarms der Orbitalgeschwindigkeit $\Omega$ weitgehend der Wellenbewegung und damit der Rotationsgeschwindigkeit 504 eines Synchronläufers. Zwischen 9 Uhr und 12 Uhr rotiert der Hebelarm langsamer als der Synchronläufer, so dass er die 12 Uhr-Position (360°/0°) weitgehend gleichzeitig mit dem Synchronläufer erreicht.

Die Änderung der Rotationsgeschwindigkeit derart, dass sich der eben beschriebene Verlauf ergibt, kann durch eine Änderung des Lastmoments - also beispielsweise des Generatormoments - und/oder durch eine Änderung der Antriebsmoments - z.B. durch Pitchverstellung oder Verstellung der Eigenrotationsgeschwindigkeit eines Flettner-Rotors - erreicht werden. Dabei kann je nach Kopplungskörper- und Rotorgeometrie eine Reduktion des Lastmoments und/oder eine Vergrößerung des Antriebsmoments zu einer Beschleunigung und eine Erhöhung des Lastmoments und/oder eine Verringerung des Antriebsmoments zu einer Abbremsung der Rotation des Hebelarms um die Rotordrehachse führen. Beide Größen können über ein entsprechendes Regelsystem, z.B. gemäß der DE 10 2011 105 177, beeinflusst werden.

In den Figuren 6a und 6b ist eine weitere bevorzugte Ausführungsform eines erfindungsgemäßen Wellenenergiekonverters schematisch in einer Seitenansicht dargestellt. Der Wellenenergiekonverter weist zwei Hebelarme auf, die relativ zueinander verschwenkt werden können, so dass die Rotationsgeschwindigkeit eines jeden Hebelarms unabhängig von der des anderen Hebelarms vorgegeben werden kann, insbesondere wie unter Bezugnahme auf die Figuren 5a und 5b erläutert. Wie beschrieben, ist die Position bei 0° und 180° wellensynchron, so dass sich hier die gerade Anordnung gemäß Figur 6a ergibt. Bei 90° ergibt sich ein Nacheilen und bei und 270° ein Vorauseilen, so dass sich hier die winkelige Anordnung gemäß Figur 6b ergibt.

**Patentansprüche**

1.  Verfahren zum Betreiben eines Wellenenergiekonverters (1) zur Umwandlung von Energie aus einer Wellenbewegung eines Fluids in eine andere Energieform,
    wobei der Wellenenergiekonverter (1) einen um eine Rotordrehachse (x) drehbar gelagerten Hebelarm (4), der einen Kopplungskörper (3) trägt, und einen mit dem drehbar gelagerten Hebelarm (4) gekoppelten Energiewandler (2,7) aufweist,
    wobei eine Rotationsgeschwindigkeit ($\omega_1$) des Hebelarms (4) um die Rotordrehachse (x) so gesteuert wird, dass sie im zeitlichen Mittel über eine Umdrehung einer Orbitalgeschwindigkeit ($\Omega$) der Wellenbewegung entspricht,
    **dadurch gekennzeichnet, dass** die Rotationsgeschwindigkeit ($\omega_1$) des Hebelarms (4) so gesteuert wird, dass ein Winkel ($\varphi$) zwischen einer Tangentialgeschwindigkeit ($v_{T,1}$, $v_{T,2}$) des Kopplungskörpers (3) und einer lokalen Strömungsgeschwindigkeit ($v_{W,1}$, $v_{W,2}$) der Wellenbewegung um den Kopplungskörper (3) höchstens um einen vorgebbaren Wert von 90° abweicht.

2.  Verfahren nach Anspruch 1, wobei der vorgebbare Wert 25°, 10° oder weniger beträgt.

3.  Verfahren nach Anspruch 2, wobei der vorgebbare Wert 0° beträgt.

4.  Verfahren nach einem der vorstehenden Ansprüche, wobei die Rotationsgeschwindigkeit ($\omega_1$) des Hebelarms (4) so gesteuert wird, dass sie langsamer als die Orbitalgeschwindigkeit ($\Omega$) der Wellenbewegung ist, wenn die Bewegung des Kopplungskörpers (3) eine Geschwindigkeitskomponente enthält, die mit einer Wellenfortschrittsgeschwindigkeit gleichgerichtet ist, und wobei die Rotationsgeschwindigkeit ($\omega_1$) des Hebelarms (4) so gesteuert wird, dass sie schneller als die Orbitalgeschwindigkeit ($\Omega$) der Wellenbewegung ist, wenn die Bewegung des Kopplungskörpers (3) eine Geschwindigkeitskomponente enthält, die der Wellenfortschrittsgeschwindigkeit entgegen gerichtet ist.

5.  Verfahren nach Anspruch 4, wobei die Rotationsgeschwindigkeit ($\omega_1$) des Hebelarms (4) so gesteuert wird, dass sie der Orbitalgeschwindigkeit ($\Omega$) der Wellenbewegung entspricht, wenn die Geschwindigkeit des Kopplungskörpers (3) senkrecht auf der Wellenfortschrittsgeschwindigkeit steht.

6.  Verfahren nach einem der vorstehenden Ansprüche, wobei die Tangentialgeschwindigkeit ($v_{T,1}$, $v_{T,2}$) des Kopplungskörpers (3) und/oder die lokale Strömungsgeschwindigkeit ($v_{W,1}$, $v_{W,2}$) der Wellenbewegung um den Kopplungskörper (3) gemessen wird.

7.  Verfahren nach einem der vorstehenden Ansprüche, wobei die lokale Strömungsgeschwindigkeit ($v_{W,1}$, $v_{W,2}$) der Wellenbewegung um den Kopplungskörper (3) ausgehend von einer lokalen Strömungsgeschwindigkeit der Wellenbewegung an der Rotordrehachse (x), an einer Position an dem Wellenenergiekonverter (1) und/oder an einer Position in dem Fluid um den Wellenenergiekonverter (1) berechnet wird.

8.  Verfahren nach einem der vorstehenden Ansprüche oder nach dem Oberbegriff des Anspruchs 1, wobei der Kopplungskörper (3) ein hydrodynamischer Kopplungskörper (3) ist und wobei ein Pitchwinkel ($\alpha_{P,1}$, $\alpha_{P,2}$) des hydrodynamischen Kopplungskörpers (3) unter Berücksichtigung eines Auftriebsbeiwerts $c_a$ und eines Widerstandsbeiwerts $c_W$ des Kopplungskörpers (3) eingestellt wird.

9.  Verfahren nach Anspruch 8, wobei eine Abhängigkeit des Auftriebsbeiwerts $c_a$ und des Widerstandsbeiwerts $c_W$ von einem Anströmwinkel ($\alpha_1$, $\alpha_2$) bei der Einstellung des Pitchwinkels ($\alpha_{P,1}$, $\alpha_{P,2}$) berück-

sichtig wird.

10. Verfahren nach Anspruch 9, wobei der Pitchwinkel ($\alpha_{P,1}$, $\alpha_{P,2}$) bestimmt wird gemäß

$$\tan \alpha_R \left( \frac{\partial c_a}{\partial \alpha} \right)_{\alpha=\alpha_{\max}} = \left( \frac{\partial c_w}{\partial \alpha} \right)_{\alpha=\alpha_{\max}}$$

$$\alpha_p = a_R - a_{\max}$$

wobei $\alpha_R$ der Winkel zwischen einer Tangentialgeschwindigkeit ($v_{T,1}$, $v_{T,2}$) des Kopplungskörpers (3) und einer sich aus der Tangentialgeschwindigkeit ($v_{T,1}$, $v_{T,2}$) des Kopplungskörpers (3) und einer lokalen Strömungsgeschwindigkeit ($v_{W,1}$, $v_{W,2}$) der Wellenbewegung um den Kopplungskörper (3) resultierenden Strömungsgeschwindigkeit ($v_{R,1}$, $v_{R,2}$) ist,
$\alpha$ der Anströmwinkel ($\alpha_1$, $\alpha_2$) und
$\alpha_P$ der sich ergebende Pitchwinkel ($\alpha_{P,1}$, $\alpha_{P,2}$) ist.

11. Recheneinheit, die dazu eingerichtet ist, ein Verfahren nach einem der vorstehenden Ansprüche durchzuführen.

12. Wellenenergiekonverter (1) zur Umwandlung von Energie aus einer Wellenbewegung eines Fluids in eine andere Energieform, aufweisend einen um eine Rotordrehachse (x) drehbar gelagerten Hebelarm (4), der einen Kopplungskörper (3) trägt, einen mit dem drehbar gelagerten Hebelarm (4) gekoppelten Energiewandler (2,7) sowie eine Recheneinheit nach Anspruch 11.

13. Wellenenergiekonverter zur Umwandlung von Energie aus einer Wellenbewegung eines Fluids in eine andere Energieform, aufweisend wenigstens zwei um eine Rotordrehachse drehbar gelagerte Hebelarme (4), von denen jeder einen Kopplungskörper (3) trägt, wobei der von den wenigstens zwei Hebelarmen an der Rotordrehachse (x) gebildete Winkel variabel ist.

14. Wellenenergiekonverter nach Anspruch 13, aufweisend eine Recheneinheit nach Anspruch 11.

**Fig. 1**

**Fig. 2**

**Fig. 3**

EP 2 677 165 A2

**Fig. 4**

**Fig. 5a**                    **Fig. 5b**

**Fig. 6a**

**Fig. 6b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2226572 A
- DE 102011105177

- EP 11009798 A

**In der Beschreibung aufgeführte Nicht-Patentliteratur**

- **VON PINKSTER et al.** A rotating wing for the generation of energy from waves. *International Workshop on Water Waves and Floating Bodies (IWWWFB), Plitvice,* 2007, vol. 22